# FASCICULE DE BREVET EUROPEEN

(11) **EP 3 088 067 B1**
(45) Date de publication et mention de la délivrance du brevet: **25.10.2017**
(21) Numéro de dépôt: 16167199.5
(22) Date de dépôt: 27.04.2016
(51) Int. Cl.: B01D 53/94, F01N 3/20, F01N 13/00, F01N 3/05, F01N 3/34

(54) **INSTALLATION ET PROCÉDÉ DE DÉNITRIFICATION CATALYTIQUE DE FUMÉES**
ANLAGE UND VERFAHREN ZUR KATALYTISCHEN ENTSTICKUNG VON RAUCHGASEN
FUME CATALYTIC DENITRIFICATION INSTALLATION AND PROCESS

(30) Priorité: 28.04.2015 FR 1553781
(43) Date de publication de la demande: 02.11.2016
(73) Titulaire: LAB SA, 69007 Lyon (FR)
(72) Inventeur: SIRET, Bernard, 69200 Venissieux (FR); TABARIES, Frank, 83430 Saint Mandrier sur Mer (FR)
(74) Mandataire: Lavoix

(56) Documents cités:
- EP-A1- 2 320 044
- WO-A1-2014/057865
- WO-A1-2014/166076
- KR-B1- 101 394 885

## Description

La présente invention concerne une installation de dénitrification catalytique de fumées, destinée préférentiellement mais non exclusivement à être implantée sur un navire. Elle concerne également un procédé de dénitrification catalytique correspondant.

Les navires, par exemple les ferries, les paquebots ou les navires marchants, utilisent usuellement des moteurs diesels destinés à assurer leur propulsion. Le fuel utilisé par ces moteurs contient du soufre de sorte que la combustion réalisée dans les moteurs produit des oxydes de soufre et des oxydes d'azote. Les fumées d'échappement correspondantes sont à traiter car les émissions naturelles d'oxyde d'azote, c'est-à-dire avant traitement, sont comprises usuellement entre 8 et 18 grammes d'oxyde d'azote par kilowattheure du moteur, alors que la règlementation demande, d'une manière simplifiée, moins de 2,5 grammes d'oxyde d'azote par kilowattheure. La dénitrification catalytique, couramment appelée dénitrification SCR (acronyme de l'expression anglaise « Selectiv Catalytic Reduction »), est un moyen reconnu pour atteindre les émissions souhaitée.

Toutefois, dans un navire, la place disponible est extrêmement réduite. Il est difficile d'y loger, à la fois, un réacteur de dénitrification, contenant un catalyseur structuré, et ses équipements annexes tels que le système d'injection d'un agent réducteur dans les fumées à traiter et le conduit de by-pass du réacteur, ce conduit de by-pass étant par exemple nécessaire en cas d'encrassement trop important du catalyseur. Une contrainte supplémentaire est apportée par les pertes de charge maximales supportables qui sont dictées par le moteur, sauf à recourir à un ventilateur de tirage qui, lui aussi, prend de la place et consomme de l'énergie.

De plus, les fumées à traiter contiennent des poussières qui, au fur et à mesure de leur accumulation sur le catalyseur, colmatent progressivement ce dernier. Il est donc connu de devoir décolmater le catalyseur régulièrement. Dans les installations de l'art antérieur, ce décolmatage est réalisé soit par des buses de soufflage, soit par des cornets acoustiques : sous l'action de ces buses ou de ces cornets, les poussières accumulées sur la surface libre amont du catalyseur structuré, c'est-à-dire sa surface par laquelle les fumées entrent dans le catalyseur, sont séparées du catalyseur et ainsi remises en suspension en amont du catalyseur. Toutefois, ces poussières remises en suspension sont réentraînées par le flux de fumées traversant en permanence le catalyseur : une partie de ces poussières peut donc se redéposer en surface du catalyseur et le reste des poussières passe à travers le catalyseur, à l'intérieur duquel ces poussières peuvent se déposer voire, pire, se fixer par collage au coeur du catalyseur.

Ainsi, WO 2014/057864 A1, qui peut être considéré comme l'état de la technique le plus proche de l'invention, divulgue une installation de dénitrification catalytique embarquée sur un navire, dont le réacteur de dénitrification et le conduit de by-pass associé sont accolés l'un à l'autre, en présentant chacun une ouverture d'entrée propre qui est munie d'un registre : lorsque le registre de l'ouverture d'entrée du réacteur est ouvert, le registre de l'ouverture d'entrée du conduit de by-pass est fermé, de sorte que des fumées à traiter passent en totalité à travers le réacteur pour les dénitrifier ; tandis que lorsque le registre de l'ouverture d'entrée du réacteur est fermé, le registre de l'ouverture d'entrée du conduit de by-pass est ouvert, de sorte que les fumées passent en totalité par le conduit de by-pass, en contournant ainsi le réacteur. Pour décolmater régulièrement le catalyseur contenu dans le réacteur, un gaz sous pression est projeté sur ce catalyseur de manière à séparer du catalyseur les poussières qui s'y étaient accumulées, ces poussières ainsi remises en suspension étant ensuite charriées par les fumées passant à travers le réacteur.

Le but de la présente invention est de proposer une installation de dénitrification catalytique, qui assure un décolmatage efficace de son catalyseur, tout en présentant un encombrement minimal.

A cet effet, l'invention a pour objet une installation de dénitrification catalytique de fumées, telle que définie à la revendication 1.

L'invention a également pour objet un procédé de dénitrification catalytique de fumées, tel que défini à la revendication 7.

Ainsi, l'invention utilise au mieux l'espace disponible pour dénitrifier des fumées, dans le sens où, comme le conduit de by-pass est accolé au réacteur de dénitrification, voire présente avantageusement une section rectangulaire accolée à la section, elle aussi rectangulaire, du réacteur de dénitrification, l'installation conforme à l'invention est particulièrement compacte, en maximisant donc la section utile du catalyseur pour un volume donné. Il en résulte une perte de charge minimale à travers cette installation, ce qui est un critère essentiel de fonctionnement. De plus, en évacuant dans le conduit de by-pass les poussières résultant du décolmatage du catalyseur, on évite que ces poussières soient réintroduites dans le catalyseur et donc qu'elles s'y déposent à coeur et/ou s'y fixent par collage. L'efficacité de ce décolmatage est donc très bonne, ce qui est particulièrement appréciable dans le cas où les canaux du catalyseur sont resserrés, c'est-à-dire à faible dimension transversale.

L'invention s'applique avantageusement à la dénitrification catalytique des fumées d'échappement de moteurs diésels d'un navire. Toutefois, cette application n'est pas limitative de l'invention dans le sens où cette dernière peut être appliquée à tout réacteur de dénitrification catalytique.

Des caractéristiques additionnelles avantageuses de l'installation et du procédé conformes à l'invention, sont spécifiées aux revendications dépendantes.

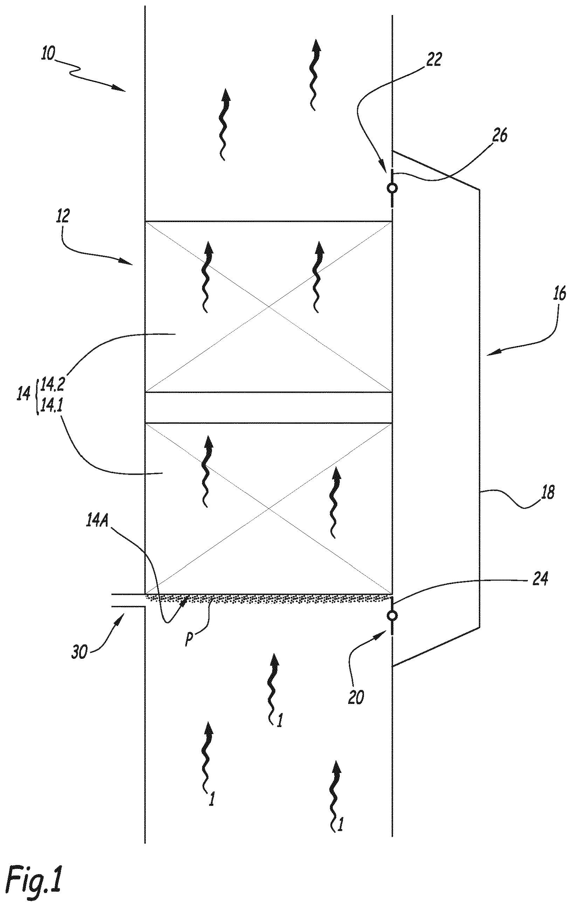

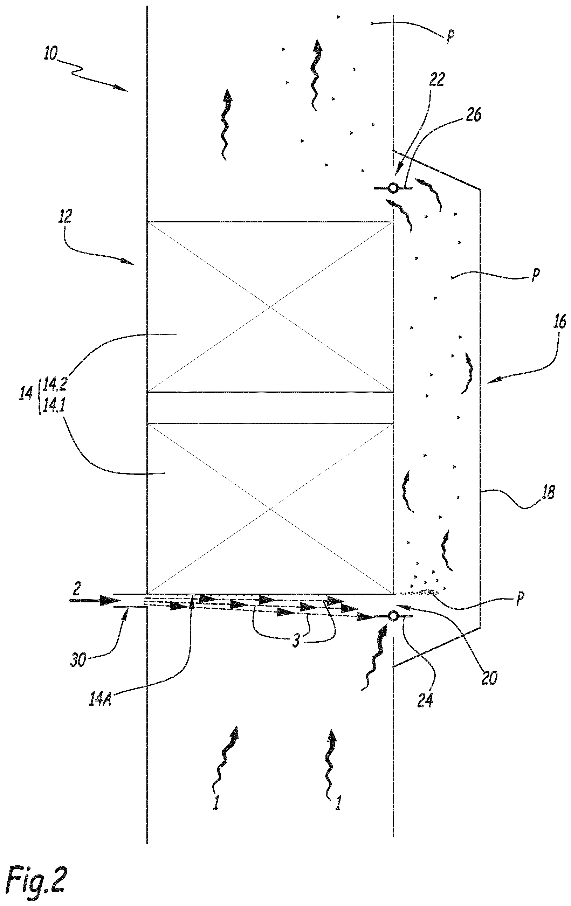

L'invention sera mieux comprise à la lecture de la description qui va suivre, donnée uniquement à titre d'exemple et faite en se référant aux dessins sur lesquels les figures 1 et 2 sont des coupes schématiques d'une installation conforme à l'invention, montrant respectivement deux configurations de fonctionnement différentes aux fins de la mise en oeuvre d'un procédé conforme à l'invention.

Sur les figures 1 et 2 est représentée une installation 10 de dénitrification catalytique de fumées à traiter 1, telles que des fumées d'échappement ou, plus généralement, des fumées contenant des oxydes d'azote.

L'installation 10 comprend un réacteur de dénitrification catalytique 12 qui contient un catalyseur structuré 14, typiquement à canaux à l'intérieur desquels un flux gazeux à traiter peut s'écouler, à savoir vers le haut sur les figures. En pratique, le catalyseur 14 est agencé dans le réacteur 12 en un seul étage ou en plusieurs étages successivement traversés par le flux gazeux à traiter, par exemple en deux étages 14.1 et 14.2 comme sur les figures.

L'installation 10 comporte également un conduit de by-pass 16 contournant le catalyseur 14.

Lorsque l'installation 10 est dans une configuration dite de dénitrification, montrée sur la figure 1, les fumées à traiter 1 ne passent pas par le conduit de by-pass 16 mais sont envoyées en totalité à travers le catalyseur 14 pour être dénitrifiées. A cette fin, de manière connue en soi et non représentée sur les figures, un agent réducteur, par exemple de l'urée ou de l'ammoniac, est introduit dans les fumées à traiter 1 en amont du réacteur 12 pour réagir, dans le catalyseur 14, avec les oxydes d'azote contenus dans les fumées.

Lorsque l'installation 10 est dans une configuration dite de décolmatage de son catalyseur 14, montrée à la figure 2, au moins une partie, voire l'essentiel des fumées à traiter 1 ne passe plus par le catalyseur 14, mais emprunte le conduit de by-pass 16 pour contourner le réacteur de dénitrification 12.

Comme représenté schématiquement sur les figures 1 et 2, le conduit de by-pass 16 est accolé au réacteur 12. En agençant ainsi de manière jointive le réacteur 12 et le conduit de by-pass 16, l'encombrement global de la partie correspondante de l'installation 10 est minimisé. Autrement dit, pour un volume d'agencement ou un encombrement donné, cet aspect de l'installation 10 assure une perte de charge minimale. Pour favoriser davantage cet aspect, le conduit de by-pass 16 est avantageusement réalisé sous forme d'une gaine 18, qui présente, perpendiculairement à la direction de passage des fumées dans cette gaine, une section rectangulaire et qui est accolée à l'un des côtés rectilignes de la partie du réacteur 12 dans laquelle sont agencés le ou les étages 14.1 et 14.2 du catalyseur 14, ce ou ces étages présentant, perpendiculairement à la direction de passage des fumées dans le catalyseur, une section également rectangulaire.

Le conduit de by-pass 16 est raccordé au réacteur 12, d'une part, en amont du catalyseur 14 par une ouverture d'entrée 20 et, d'autre part, en aval du catalyseur par une ouverture de sortie 22. Le conduit de by-pass 16, en particulier sa gaine 18, s'étend ainsi intégralement de l'ouverture d'entrée 20 à l'ouverture de sortie 22. Afin de sélectivement autoriser ou empêcher les fumées 1 de passer par le conduit de by-pass 16, ce dernier est équipé d'au moins un registre conçu pour passer d'une position fermée, qu'il occupe lorsque l'installation 10 est dans la configuration de dénitrification de la figure 1 et dans laquelle le registre obture totalement, à des fuites près, le conduit de by-pass 16, et une position ouverte, que le registre occupe lorsque l'installation 10 est dans la configuration de décolmatage de la figure 2 et dans laquelle le registre laisse les fumées 1 s'écouler librement dans le conduit de by-pass 16, de l'ouverture de l'entrée 20 jusqu'à l'ouverture de sortie 22. Dans la forme de réalisation préférentielle montrée sur les figures, deux tels registres sont prévus, qui sont respectivement référencés 24 et 26 et qui sont respectivement agencés dans l'ouverture d'entrée 20 et dans l'ouverture de sortie 22 : dans la configuration de dénitrification de l'installation 10, les registre 24 et 26, alors en position fermée, canalisent ainsi les fumées 1 dans la partie du réacteur 12 où sont agencées les étages 14.1 et 14.2, autrement dit canalisent les fumées directement vis-à-vis du catalyseur 14. A titre de variante non représentée, un seul registre est prévu.

Dans la mesure où les fumées à traiter 1 contiennent systématiquement des poussières P au sens large du terme, telles que par exemple des suies ou des cendres, ces fumées tendent à progressivement encrasser le catalyseur au fur-et-à-mesure qu'elles sont envoyées au travers de ce dernier, notamment en s'accumulant à la surface libre amont 14A de ce catalyseur, c'est-à-dire sa surface libre par laquelle les fumées 1 entrent à l'intérieur du catalyseur. Sur la figure 1, cette accumulation des poussières P est schématisée par une couche, d'épaisseur volontairement exagérée, recouvrant la surface libre 14A de l'étage de catalyseur amont 14.1.

Pour neutraliser la perte de charge à travers le catalyseur 14, résultant de cette accumulation des poussières P, il est nécessaire de procéder régulièrement à un décolmatage du catalyseur, visant à dégager tout ou partie des poussières P de sa surface libre amont 14A. Pour ce faire, l'installation 10 comprend une ou, en pratique, plusieurs buses de soufflage 30 qui, comme représenté schématiquement sur les figures 1 et 2, débouchent dans le réacteur 12 en amont du catalyseur 14, plus précisément sensiblement au niveau de la surface libre amont 14A de ce catalyseur. Les buses 30 sont alimentées, par des moyens ad hoc, non représentés, incluant par exemple des électrovannes, avec un fluide 2 sous pression, tel que l'air ou de la vapeur d'eau, et sont conçues pour projeter ce fluide dans le réacteur 12, tangentiellement à la surface libre amont 14A du catalyseur 14, les jets de fluide correspondants étant schématisés par des flèches 3 sur la figure 2.

Les jets de fluide 3 sortant des buses 30 sont prévus pour balayer la surface libre 14A du catalyseur 14 de manière à retirer de cette surface les poussières P, en les entraînant à la fois tangentiellement à cette surface 14A et à l'opposé des buses 30. En pratique, les buses 30 relèvent, en tant que telles, d'une technologie connue. Suivant une forme de réalisation préférentielle, les buses 30 sont aplaties de manière que chaque buse souffle le fluide 2 sous forme d'une lame en éventail.

Comme montré sur les figures 1 et 2, les buses 30 ne sont pas alimentées en fluide 2 de manière permanente pendant le fonctionnement de l'installation 10. Ainsi, lorsque l'installation 10 est en configuration de dénitrification de la figure 1, les buses 30 sont inactives de manière à laisser les poussières P s'accumuler principalement sur la surface libre amont 14A du catalyseur 14, sans les remettre en suspension en amont du catalyseur, ce qui ferait courir le risque que ces poussières, en étant réentrainées par les fumées 1 envoyées en permanence dans le réacteur 12, s'introduisent en profondeur dans le catalyseur et se déposent voire se fixent par collage au coeur du catalyseur. Afin de décolmater efficacement le catalyseur 14, une phase spécifique de décolmatage est mise en oeuvre, pendant toute la durée de laquelle l'installation 10 est dans la configuration de décolmatage de la figure 2 et les buses de soufflage 30 produisent les jets de fluide 3 : les poussières P, balayées par ces jets de fluide, sont alors évacuées, conjointement avec au moins une partie des fumées à traiter 1, par le conduit de by-pass 16, évitant ainsi, pour au moins la quasi-totalité de ces poussières, d'entrer en profondeur dans le catalyseur. Pour que cette évacuation des poussières P dans le conduit de by-pass 16 par les jets de fluide 3 soit efficace, on comprend que le fluide projeté par les buses 30 est dirigé vers l'ouverture d'entrée 20 de ce conduit de by-pass. Aussi, suivant un agencement préférentiel, montré sur les figures, la surface libre amont 14A du catalyseur 14 et l'ouverture d'entrée 20 du conduit de by-pass 16 sont en regard l'une de l'autre suivant une direction tangentielle à cette surface 14A, ce qui revient à dire que le débouché des buses de soufflage 30, la surface 14A du catalyseur 14 et l'ouverture d'entrée 20 du conduit de by-pass 16 sont sensiblement alignés. Ceci étant, un léger décalage entre eux, par exemple de quelques centimètres voire de quelques dizaines de centimètres, est acceptable du moment que les jets de fluide 3 sortant des buses de soufflage 30 sont, à la fois, tangentiels à la surface libre 14A du catalyseur et orientés vers l'ouverture d'entrée 20 du conduit de by-pass.

Comme montré sur les figures 1 et 2, l'envoi des fumées à traiter 1 vers le réacteur de dénitrification 12 est maintenu aussi bien pendant la phase de décolmatage, que pendant une phase distincte de la phase de décolmatage, correspondant à une phase de dénitrification de ces fumées, pendant toute la durée de laquelle l'installation 10 est dans la configuration de dénitrification de la figure 1. Ainsi, pendant la phase de décolmatage, une partie, voire la quasi-totalité des fumées à traiter 1 entraîne les poussières P, retirées de la surface libre amont 14A du catalyseur 14 par les jets de fluide 3, à la fois tout le long du conduit de by-pass 16, c'est-à-dire de son ouverture d'entrée 20 jusqu'à son ouverture de sortie 22, puis en aval du catalyseur 14, sans que cette partie des fumées 1 ne soit passée au travers du catalyseur. En aval du catalyseur 14, les fumées qui sont passées par le conduit de by-pass 16, en transportant les poussières P, se mélangent, le cas échéant, avec le reliquat des fumées à traiter 1, ayant traversé le catalyseur 14. On comprend que, pendant la phase de décolmatage, les fumées 1 qui passent par le conduit de by-pass 16 ne sont pas dénitrifiées et sont évacuées du réacteur 12 avec les poussières P qu'elles charrient. A la fin de la phase de décolmatage, l'alimentation des buses de soufflage 30 par le fluide 2 est interrompue et l'installation 10 passe de sa configuration de décolmatage à sa configuration de dénitrification, par fermeture du ou des registres 24 et 26 : la phase de dénitrification est alors mise en oeuvre. Puis, au bout d'un temps prédéterminé, la phase de dénitrification est interrompue au profit d'une répétition de la phase de décolmatage, et ainsi de suite. A titre d'exemple, la fréquence de répétition de la phase de décolmatage est comprise entre une fois par heure et une fois par jour. En pratique, la durée de la phase de décolmatage, préférentiellement comprise entre 20 secondes et 2 minutes, fait que, au regard de la fréquence à laquelle cette phase de décolmatage est alternée avec la phase de dénitrification, la non dénitrification des fumées passant par le conduit de by-pass 16 pendant la phase de décolmatage est sans incidence significative sur les émissions moyennes finales d'oxyde d'azote.

## Revendications

1. Installation (10) de dénitrification catalytique de fumées, comprenant :
- un réacteur de dénitrification (12) contenant un catalyseur structuré (14) à travers lequel des fumées à traiter (1) passent pour être dénitrifiées,
- un conduit de by-pass (16) :
- qui est pourvu d'au moins un registre (24, 26),
- qui est accolé au réacteur de dénitrification, en y étant raccordé, en amont du catalyseur (14), par une ouverture d'entrée (20),
- par lequel les fumées à traiter contournent le réacteur de dénitrification sans passer par le catalyseur lorsque le ou les registres sont ouverts, et
- des moyens (30) de décolmatage du catalyseur, adaptés pour projeter un fluide (2) dans le réacteur de manière à dégager des poussières (P) de la surface libre amont (14A) du catalyseur,
**caractérisé en ce que** les moyens de décolmatage (30) sont adaptés pour projeter le fluide (2), à la fois, tangentiellement à la surface libre amont (14A) du catalyseur, pour en retirer les poussières (P), et vers l'ouverture d'entrée (20) du conduit de by-pass (16) pour évacuer les poussières par ce conduit de by-pass conjointement avec au moins une partie des fumées à traiter (1).

2. Installation suivant la revendication 1, **caractérisée en ce que** la surface libre amont (14A) du catalyseur et l'ouverture d'entrée (20) du conduit de by-pass (16) sont en regard l'une de l'autre suivant une direction tangentielle à cette surface.

3. Installation suivant l'une des revendications 1 ou 2, **caractérisée en ce que** les moyens de décolmatage comprennent au moins une buse (30) de soufflage du fluide (2), alimentée avec le fluide sous pression.

4. Installation suivant la revendication 3, **caractérisée en ce que** la ou chaque buse (30) est aplatie de manière à souffler le fluide (2) sous forme d'une lame en éventail.

5. Installation suivant l'une quelconque des revendications précédentes, **caractérisée en ce que** le ou l'un des registres (24) est agencé dans l'ouverture d'entrée (20) du conduit de by-pass (16) de manière à canaliser les fumées à traiter (1) dans le catalyseur (14) lorsque ce registre est fermé.

6. Installation suivant l'une quelconque des revendications précédentes, **caractérisée en ce que** le catalyseur (14) est agencé, dans le réacteur de dénitrification (12), en un ou plusieurs étages (14.1, 14.2) présentant, perpendiculairement à la direction de passage des fumées à traiter (1) dans le catalyseur, une section sensiblement rectangulaire,
et **en ce que** le conduit de by-pass (16) est réalisé sous forme d'une gaine (18), qui présente, perpendiculairement à la direction de passage des fumées à traiter dans le conduit de by-pass, une section sensiblement rectangulaire et qui est accolée à l'un des côtés du réacteur de dénitrification.

7. Procédé de dénitrification catalytique de fumées,
lequel procédé inclut une phase de dénitrification, dans laquelle des fumées à traiter (1) passent en totalité à travers un catalyseur structuré (14) d'un réacteur de dénitrification (12),
**caractérisé en ce que** le procédé inclut en outre, en alternance avec la phase de dénitrification, une phase de décolmatage du catalyseur (14), dans laquelle :
- au moins une partie des fumées à traiter (1) contourne le réacteur de dénitrification (12) sans passer par le catalyseur (14), via un conduit de by-pass (16) accolé au réacteur de dénitrification en y étant raccordé, en amont du catalyseur, par une ouverture d'entrée (20), et
- un fluide (2) est projeté, à la fois, tangentiellement à la surface libre amont (14A) du catalyseur (14), pour en retirer des poussières (P), et vers l'ouverture d'entrée (20) du conduit de by-pass (16) pour évacuer les poussières par ce conduit de by-pass conjointement avec ladite au moins une partie des fumées.

8. Procédé suivant la revendication 7, **caractérisé en ce que** la phase de décolmatage dure entre 20 secondes et 2 minutes.

9. Procédé suivant l'une des revendications 7 ou 8, **caractérisé en ce que** la phase de décolmatage est répétée à une fréquence comprise entre une fois par heure et une fois par jour.

10. Procédé suivant l'une quelconque des revendications 7 à 9, **caractérisé en ce que** le procédé est mis en oeuvre par une installation (10) conforme à l'une quelconque des revendications 1 à 6.

## Patentansprüche

1. Katalytische Rauchgasentstickungsanlage (10), Folgendes aufweisend :
- einen Entstickungsreaktor (12), der einen strukturierten Katalysator (14) enthält, den die zu behandelnden Rauchgase (1) durchströmen, um entstickt zu werden,
- eine Umgehungsleitung (16):
- die mit mindestens einem Schieber (24, 26) versehen ist,
- die an den Entstickungsreaktor angefügt und dabei, dem Katalysator (14) vorgeordnet, über eine Eintrittsöffnung (20) an diesen angeschlossen ist,
- durch welche Leitung die zu behandelnden Rauchgase den Entstickungsreaktor umgehen, ohne den Katalysator zu durchströmen, wenn der oder die Schieber offen ist bzw. sind, und
- Einrichtungen (30) zum Reinigen des Katalysators, die dazu angepasst sind, ein Fluid (2) in den Reaktor einzuleiten, um Stäube (P) von der freien Anströmfläche (14A) des Katalysators zu lösen,
**dadurch gekennzeichnet, dass** die Reinigungseinrichtungen (30) dazu angepasst sind, das Fluid (2) gleichzeitig tangential zur freien Anströmfläche (14A) des Katalysators, um die Stäube (P) davon zu entfernen, und zur Eintrittsöffnung (20) der Umgehungsleitung (16) einzuleiten, um die Stäube zusammen mit zumindest einem Teil der zu behandelnden Rauchgase (1) durch diese Umgehungsleitung (16) auszuleiten.

2. Anlage nach Anspruch 1, **dadurch gekennzeichnet, dass** die freie Anströmfläche (14A) des Katalysators und die Eintrittsöffnung (20) der Umgehungsleitung (16) einander in einer zu dieser Fläche tangentialen Richtung zugewandt sind.

3. Anlage nach einem der Ansprüche 1 oder 2, **dadurch gekennzeichnet, dass** die Reinigungseinrichtungen mindestens eine Blasdüse (30) für das Fluid (2) aufweisen, die mit dem unter Druck stehenden Fluid gespeist wird.

4. Anlage nach Anspruch 3, **dadurch gekennzeichnet, dass** die oder jede Düse (30) abgeflacht ist, um das Fluid (2) in Form einer fächerförmigen Schicht auszublasen.

5. Anlage nach einem der vorhergehenden Ansprüche, **dadurch gekennzeichnet, dass** der oder einer der Schieber (24) in der Eintrittsöffnung (20) der Umgehungsleitung (16) angeordnet ist, um die zu behandelnden Rauchgase (1) in den Katalysator (14) zu leiten, wenn dieser Schieber geschlossen ist.

6. Anlage nach einem der vorhergehenden Ansprüche, **dadurch gekennzeichnet, dass** der Katalysator (14) im Entstickungsreaktor in einer oder mehreren Stufe/n (14.1, 14.2) angeordnet ist, die senkrecht zur Durchströmungsrichtung der im Katalysator zu behandelnden Rauchgase (1) einen im Wesentlichen rechteckigen Abschnitt aufweist bzw. aufweisen,
und dass die Umgehungsleitung (16) in Form einer Hülle (18) ausgeführt ist, die senkrecht zur Durchströmungsrichtung der zu behandelnden Rauchgase in der Umgehungsleitung einen im Wesentlichen rechteckigen Abschnitt aufweist, der an eine der Seiten des Entstickungsreaktors angefügt ist.

7. Verfahren zur katalytischen Entstickung von Rauchgasen,
wobei das Verfahren eine Entstickungsphase umfasst, in der die zu behandelnden Rauchgase (1) gänzlich einen strukturierten Katalysator (14) eines Entstickungsreaktors (12) durchströmen,
**dadurch gekennzeichnet, dass** das Verfahren darüber hinaus abwechselnd mit der Entstickungsphase eine Reinigungsphase für den Katalysator (14) umfasst, in der:
- zumindest ein Teil der zu behandelnden Rauchgase (1) den Entstickungsreaktor, ohne den Katalysator (14) zu durchströmen, über eine Umgehungsleitung (16) umgeht, die an den Entstickungsreaktor angefügt und dabei, dem Katalysator (14) vorgeordnet, über eine Eintrittsöffnung (20) an diesen angeschlossen ist, und
- ein Fluid (2) gleichzeitig tangential zur freien Anströmfläche (14A) des Katalysators, um die Stäube (P) davon zu entfernen, und zur Eintrittsöffnung (20) der Umgehungsleitung (16) eingeleitet wird, um die Stäube zusammen mit zumindest einem Teil der Rauchgase durch diese Umgehungsleitung auszuleiten.

8. Verfahren nach Anspruch 7, **dadurch gekennzeichnet, dass** die Reinigungsphase zwischen 20 Sekunden und 2 Minuten dauert.

9. Verfahren nach einem der Ansprüche 7 oder 8, **dadurch gekennzeichnet, dass** die Reinigungsphase mit einer Häufigkeit wiederholt wird, die zwischen einmal pro Stunde und einmal pro Tag beträgt.

10. Verfahren nach einem der Ansprüche 7 bis 9, **dadurch gekennzeichnet, dass** das Verfahren durch eine Anlage (10) nach einem der Ansprüche 1 bis 6 umgesetzt wird.

## Claims

1. Installation (10) for the catalytic denitrification of exhaust gases, comprising:
- a denitrification reactor (12) containing a structured catalyst (14) through which exhaust gases to be treated (1) pass in order to be denitrified,
- a bypass pipe (16):
- which is provided with at least one stop (24, 26),
- which is mounted on the denitrification reactor while being connected thereto, upstream of the catalyst (14), by an inlet opening (20),
- through which the exhaust gases to be treated bypass the denitrification reactor without passing through the catalyst when the stop or stops are open, and
- means (30) for unclogging the catalyst, which means are adapted to project a fluid (2) into the reactor so as to free dust (P) from the upstream free surface (14A) of the catalyst,
**characterised in that** the unclogging means (30) are adapted to project the fluid (2) both tangentially to the upstream free surface (14A) of the catalyst, in order to remove the dust (P) therefrom, and towards the inlet opening (20) of the bypass pipe (16) in order to evacuate the dust through the bypass pipe together with at least a portion of the exhaust gases to be treated (1).

2. Installation according to claim 1, **characterised in that** the upstream free surface (14A) of the catalyst and the inlet opening (20) of the bypass pipe (16) are opposite one another in a direction tangential to that surface.

3. Installation according to either claim 1 or claim 2, **characterised in that** the unclogging means comprise at least one nozzle (30) for blowing the fluid (2), which nozzle is supplied with the fluid under pressure.

4. Installation according to claim 3, **characterised in that** the or each nozzle (30) is flat in order to blow the fluid (2) in the form of a fan-shaped wave.

5. Installation according to any one of the preceding claims, **characterised in that** the stop or one of the stops (24) is arranged in the inlet opening (20) of the bypass pipe (16) so as to channel the exhaust gases to be treated (1) into the catalyst (14) when the stop is closed.

6. Installation according to any one of the preceding claims, **characterised in that** the catalyst (14) is arranged, in the denitrification reactor (12), in one or more stages (14.1, 14.2) having, perpendicularly to the direction of passage of the exhaust gases to be treated (1) in the catalyst, a substantially rectangular cross-section,
and **in that** the bypass pipe (16) is in the form of a sheath (18) which has, perpendicularly to the direction of passage of the exhaust gases to be treated in the bypass pipe, a substantially rectangular cross-section and which is mounted on one of the sides of the denitrification reactor.

7. Method for the catalytic denitrification of exhaust gases,
which method includes a denitrification phase in which exhaust gases to be treated (1) pass wholly through a structured catalyst (14) of a denitrification reactor (12), **characterised in that** the method further includes, in alternation with the denitrification phase, a phase of unclogging of the catalyst (14), in which:
- at least a portion of the exhaust gases to be treated (1) bypasses the denitrification reactor (12) without passing through the catalyst (14), *via* a bypass pipe (16) mounted on the denitrification reactor while being connected thereto, upstream of the catalyst, by an inlet opening (20), and
- a fluid (2) is projected both tangentially to the upstream free surface (14A) of the catalyst (14), in order to remove dust (P) therefrom, and towards the inlet opening (20) of the bypass pipe (16), in order to evacuate the dust through the bypass pipe together with said at least a portion of the exhaust gases.

8. Method according to claim 7, **characterised in that** the unclogging phase lasts between 20 seconds and 2 minutes.

9. Method according to either claim 7 or claim 8, **characterised in that** the unclogging phase is repeated at a frequency of between once per hour and once per day.

10. Method according to any one of claims 7 to 9, **characterised in that** the method is carried out by an installation (10) according to any one of claims 1 to 6.
